# EUROPEAN PATENT SPECIFICATION

(11) **EP 0 456 171 B1**
(45) Date of publication and mention of the grant of the patent: **29.01.1997**
(21) Application number: 91107356.7
(22) Date of filing: 07.05.1991
(51) Int. Cl.: G11B 33/14

(54) **An apparatus for recording/reproducing information**
Informationsaufzeichnungs-/-wiedergabegerät
Appareil d'enregistrement et de reproduction d'information

(30) Priority: 09.05.1990 JP 119274/90
(43) Date of publication of application: 13.11.1991
(73) Proprietor: NIPPON CONLUX CO., LTD., Chiyoda-ku Tokyo-To (JP)
(72) Inventor: Suzuki, Hidenori, Fujimi-shi, Saitama-ken (JP)
(74) Representative: Lippert, Hans, Dipl.-Ing.

(56) References cited:
- GB-A- 2 142 786
- US-A- 4 691 274
- IBM TECHNICAL DISCLOSURE BULLETIN. vol. 25, no. 7B, December 1982, NEW YORK US pages 3906 - 3908; G. E. DOODY: 'INDUCED COOLING IN A UNIT COOLING SCHEME'
- IBM TECHNICAL DISCLOSURE BULLETIN. vol. 20, no. 6, November 1977, NEW YORK US pages 2428 - 2429; D. S. GAUNT: 'COOLING ELECTRICAL EQUIPMENT'
- IBM TECHNICAL DISCLOSURE BULLETIN. vol. 17, no. 9, February 1975, NEW YORK US pages 2229 - 2230; J. R. HAMMER: 'VENTILATION SYSTEM FOR DATA PROCESSING SYSTEMS'
- PATENT ABSTRACTS OF JAPAN vol. 8, no. 219 (P-306)(1656) 5 October 1984 & JP-A-59 101 077

## Description

The present invention relates to an apparatus for recording/reproducing information with means for effectively cooling heat generating portions and particularly the heat generating portions on a supply source circuit in an instrument section for recording a number of information in an information recording medium such as an optical card or the like and regenerating the recorded information therefrom.

An apparatus for recording/reproducing information by irradiating a laser light to an information recording medium such as an optical card or the like has been hitherto known. The apparatus includes an instrument section for recording a large number of information by irradiating a laser light to the optical card while the optical card is displaced relative to an optical head. To drive and control the instrument section, an electronic control circuit including semiconductor integrated circuits and various electronic components is arranged in a common housing. Since some of the electronic components in the electric control circuit generate heat as they are fed with an electric current, there is a need of cooling the electronic components by introducing a cooling air into the housing from the outside. To this end, the electronic components have been heretofore cooled by introducing an environmental air into the housing via an air intake port so as to allow the cooling air to flow through the whole area of the housing.

With the conventional apparatus constructed in the above-described manner, however, since the cooling air is introduced into the whole area of the housing together with dusts in an environmental atmosphere, there arises a problem that the dusts adhere to the light receiving surface of an optical head for recording information in the optical card and regenerating the recorded information therefrom or water drops are deposited on the same, resulting in am operation for recording and regenerating information failing to be performed correctly and exactly.

Also the following known solutions have the aim to effectively cool all electronic and electric components by directly blowing cooling air through diverse sections within a housing.

IBM Technical Disclosure Bulletin, Vol.20, No. 6, Nov. 1977, pages 2428-2429 effectively cools all of various types of electrical and electronic equipment by means of three independent cooling air paths in order to prevent recirculation of hot air. For providing these three independent air paths three fans are used in the outlet portion of the air paths. A first air path is constituted by a first duct and cools heat sink fins of a power supply which project into the duct. The air flow subsequently is directed to the rearward end of a housing whereby it passes vertically through an electronic gate. A second duct extends in parallel to the first duct and forces air directly through an enclosed logic gate. A third duct again parallel to the first and second duct draws cooling air through a rear grille to cool an enclosed disc file and the power supply. Accordingly, the cooling air is directed directly through an enclosed logic gate as well as through an electronic gate.

IBM Technical Disclosure Bulletin, Vol. 25, No. 7B, Dec. 1982, New York US, pages 3906-3908, G. E. Doody: "Induced Cooling in A unit Cooling Scheme" discloses an apparatus appreciated in the preamble of claim 1, including a housing with a power supply and an information recording/ reading apparatus . The power supply comprises an air intake and an air output, a supply source duct for the air and a single cooling fan. A supply source circuit board is implicitely disclosed. The single fan is mounted centrally within the equipment housing and below CPU gates and draws air through an air inlet provided in a housing front wall near the bottom of the housing. The air is drawn through a power supply of low voltage and an adjacent high voltage power supply in direct line with and below the fan. The discette unit is arranged above the low voltage power supply and cooled with low velocity frech air. The CPU gates are cooled by a mixture of high velocity heated air taken from the upper side of the high voltage power supply and frech air taken from an interior space in the housing above the housed power supply unit. The air outlet is provided in the upper portion of the housing wall opposite said front wall.

The present invention has been made with the foregoing background in mind.

An Object of the present invention is an apparatus for recording/reproducing information wherein the heat generating electronic components only in a control circuit section are effectively cooled without an occurrence of undesirable adhesion of dusts to the light receiving surface of an optical head in an instrument section.

To accomplish the above object the present invention provides an apparatus for recording/reproducing information comprising as essential components a housing, an instrument section arranged in the housing for recording / reproducing informations, a power supply source section having a supply source circuit board in a supply source duct , said duct being arranged in the housing, an air intake port formed on one wallof the supply source duct, an air outlet port formed on another wall of the supply source duct, an air flow passage formed between one side wall of the supply souce duct and the supply souce circuit board so as to allow the air intake port to be communicated with the air outlet port, and a cooling fan disposed in the air outlet port, said one side wall extending along the adjacent instrument section, whereby said instrument section is cooled by air flowing through said air flow passage; said supply source circuit board being disposed parallel to said one side wall in the direction of said supply source duct thereby dividing said supply source duct into two parallel ducts being said air flow passage and a supply source chamber; said supply source circuit board being turned so that the electronic components of said board are within said supply source chamber; said intake and outlet ports being disposed at the same end of said supply source duct communicating with said air flow passage and said supply source chamber, respectively; wherein an air flow return port is provided between said air flow passage and said supply source chamber at the end of the supply source duct being opposite to said intake and outlet ports whereby the air flowing through said air flow passage is subsequently directed through said supply source chamber towards said outlet port while cooling said electronic components on said supply source circuit board.

According to the present invention, a cooling air is introduced into the interior of the supply source duct via the air intake port and the air flow passage between the side wall of the supply source duct and the supply source circuit board, and after it cools heat generating electronic components in the supply source circuit section , it is discharged to the outside via the air outlet port. Thus, the apparatus can perform correct recording/reproducing operations at all times.

Further, according to the present invention, since the instrument section for recording/reproducing information and the supply source circuit for driving and controlling the instrument section are received in a common house duct while forming an air flow passage therebetween so as to allow a cooling air to flow through the whole area of the supply source duct, electronic components on a supply source duct board can effectively be cooled without an occurrence of undesirable adhesion of dusts in the cooling air to an optical head and an optical card in the instrument section. Accordingly, there is no possibility that the optical head and the optical card are adversely affected by the dusts in the cooling air.

Advantageous further developments are defined in the subclaim.

Other advantages of the present invention will become apparent from reading of the following description which has been made in conjunction of the accompanying drawings.

The present invention is illustrated in the following drawings in which:
Fig. 1 is a plan view of an apparatus for recording/reproducing information in accordance with an embodiment of the present invention;
Fig. 2 is a sectional view of the apparatus taken along II - II in Fig. 1; and
Fig. 3 is a view of a supply source duct for the apparatus as seen from the rear side.

Now, the present invention will be described in detail hereinafter with a reference to the accompanying drawings which illustrate an apparatus for recording/reproducing information in accordance with a preferred embodiment of the present invention.

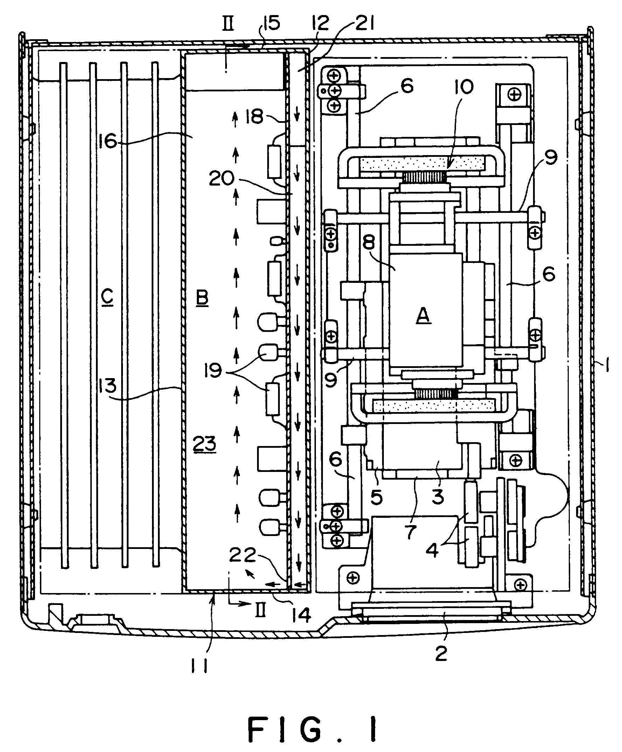

In Fig. 1, reference numeral 1 designates a housing for the apparatus. An instrument section A, a power supply source circuit section B and a control circuit section C are arranged in the housing 1. The instrument section A is constructed such that a large number of information is recorded in an optical card 3 inserted through a card inlet 2 to serve as an information recording medium by irradiating a laser light toward the optical card 3 and the recorded information is regenerated from the optical card 3 as required.

The construction of the instrument section A will be described below in more details.

As the optical card 3 is inserted through the card inlet 2 into the interior of the apparatus, a feed roller mechanism 4 is activated to deliver the optical card 3 onto a card conveyance platform 5 in the instrument section A. The card conveyance platform 5 is adapted to linearly reciprocably move along a pair of guide shafts 6 in the longitudinal direction as seen in Fig. 1, as a linear motor 7 is driven. As is apparent from the drawing, the guide shafts 6 are arranged in the longitudinal direction in parallel with each other. The linear motor 7 is composed of a coil mounted on the card conveyance platform 5 side and an armature inclusive of permanent magnets fixedly mounted on the housing 1 side.

In addition, an optical head carriage 8 adapted to linearly reciprocably move in the transverse direction as seen in the drawing at a right angle relative to the direction of movement of the card conveyance platform 5 is operatively mounted on the card conveyance platform 5. As a linear motor 10 is driven, the optical head carriage 8 linearly and reciprocably moves along a pair of guide shafts 9 arranged in the transverse direction in parallel with each other. The linear motor 10 is composed of a coil mounted on the optical head carriage 8 side and an armature fixedly mounted on the housing 1 side.

A supply source duct 11 is accommodated adjacent to the instrument section A in the housing 1. The supply source duct 11 is composed of side walls 12 and 13, a front wall 14, a rear wall 15, a bottom wall 16 and a top wall 17. A supply source circuit board 18 is arranged along the side wall 12 in the supply source duct 11. Additionally, various electronic components 19 constituting a supply source circuit are mounted in position on the supply source board 18.

An air flow passage 20 is formed between the supply source circuit board 18 and the side wall 12. An air intake port 21 serving as an inlet for the air flow passage 20 is formed on the bottom wall 16 so as to allow the air flow passage 20 to be communicated with the outside via the air intake port 21. In addition, an air flow return port 22 is formed at the position adjacent to the front wall 14 of the supply source circuit board 18.

The supply source duct 11 includes a supply source chamber 23 which is formed with an air outlet port 24 in which a cooling fan 25 is disposed. It is desirable that a cooling fan adapted to be driven by a brushless motor is employed for the cooling fan 25.

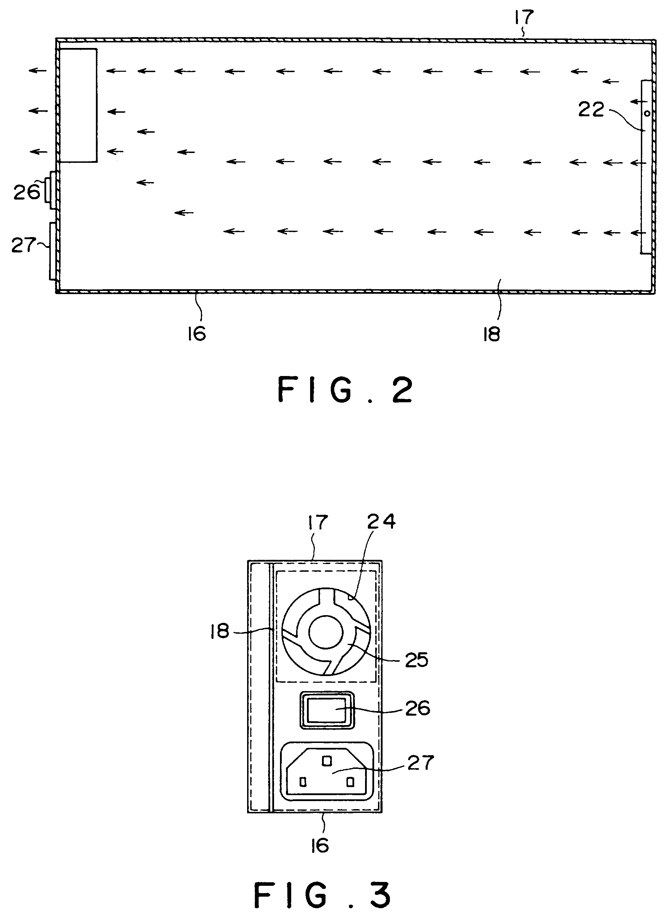

In Fig. 3, reference numeral 26 designates a supply source switch and reference numeral 27 designates a supply source inlet.

With the apparatus constructed in the above-described manner, as the cooling fan 25 is rotated, an environmental air is introduced into the air flow passage 20 via the air intake port 21 and then flows through the air flow passage 20 in the arrow-marked direction while cooling the side wall 12 on the instrument section A side. The direction of flowing of the cooling air through the air flow passage 20 is reversed at the return port 22 and then the cooling air flows through the supply source chamber 23 in the arrow-marked direction while cooling the electronic components on the supply source circuit board 18. Thereafter, the air is discharged to the outside by the cooling fan 25.

The present invention has been described above with respect to the embodiment wherein the air intake port 21 is formed on the bottom wall 16 of the supply source duct 11 and the outlet port 24 is formed on the rear wall 15 of the same. However, the present invention should not be limited to this arrangement. Alternatively, the air intake port 21 may be formed on the rear wall 15 and the outlet port 24 may be formed on the bottom wall 16. Additionally, a plurality of air intake ports may be formed for the apparatus.

While the present invention has been described above with a single preferred embodiment thereof but it should of course be understood that the present invention should not be limited only to this embodiment but various changed or modifications may be made without departure from the scope of the invention as defined by the appended claims.

## Claims

1. An apparatus for recording/reproducing information, comprising as essential components a housing (1), an instrument section (A) arranged in the housing (1) for recording/reproducing informations, a power supply source section (B), having a supply source circuit board (18) in a supply source duct (11), said duct being arranged in the housing (1), an air intake port (21) formed on one wall (16) of the supply source duct (11), an air outlet port (24) formed on another wall (15) of the supply source duct (11), an air flow passage (20) formed between one side wall (12) of the supply source duct (11) and the supply source circuit board (18) so as to allow the air intake port (21) to be communicated with the air outlet port (24), and a cooling fan (25) disposed in the air outlet port (24),
characterized in that
- said one side wall (12) extends along the adjacent instrument section (A), whereby said instrument section is cooled by air flowing through said air flow passage (20);
- said supply source circuit board (18) is disposed parallel to said one side wall (12) in the direction of said supply source duct (11) thereby dividing said supply source duct into two parallel ducts being said air flow passage (20) and a supply source chamber (23);
- said supply source circuit board (18) is turned so that the electronic components of said board are within said supply source chamber (23);
- said intake and outlet ports (21, 24) are disposed at the same end of said supply source duct (11) communicating with said air flow passage (20) and said supply source chamber (23), respectively; and that
- an air flow return port (22) is provided between said air flow passage (20) and said supply source chamber (23)at the end of the supply source duct (11) being opposite to said intake and outlet ports whereby the air flowing through said air flow passage (20) is subsequently directed through said supply source chamber (23) towards said outlet port (24) while cooling said electronic components on said supply source circuit board (18).

2. An apparatus according to claim 1 characterized in that the air intake port (21) is formed on a bottom wall (16) of the supply source duct (11) and the air outlet port (24) is formed on a rear side wall (15) of the supply source duct (11).

## Patentansprüche

1. Vorrichtung zur Aufzeichnung/Wiedergabe von Information, aufweisend als wesentliche Bestandteile ein Gehäuse (1), einen Instrumentenabschnitt (A), der im Gehäuse (1) zur Aufzeichnung/ Wiedergabe von Information, ein Energieversorgungsabschnitt (B), der in einem Versorgungskanal (11) eine Versorgungsschaltungskarte (18) aufweist, wobei der Kanal im Gehäuse (1) angeordnet ist, eine Lufteinlaßöffnung (21), die an einer Wand (16) des Versorgungskanals (11) ausgebildet ist, eine Luftauslaßöffnung (24), die an einer anderen Wand (15) des Versorgungskanals (11) ausgebildet ist, einen Luftströmungsdurchgang (20), der zwischen einer Seitenwand (12) des Versorgungskanals (11) und der Versorgungsschaltungskarte (18) so ausgebildet ist, daß die Lufteinlaßöffnung (21) mit der Luftauslaßöffnung (24) kommunizieren kann, und einen Lüfter (25), der in der Luftauslaßöffnung (24) angeordnet ist,
**dadurch gekennzeichnet**,
daß diese eine Seitenwand (12) sich längs des angrenzenden Instrumentenabchnitts (A) erstreckt, wodurch der Instrumentenabschnitt durch Luft gekühlt wird, die durch den Luftströmungsdurchgang (20) strömt;
die Versorgungsschaltungskarte (18) parallel zu dieser einen Seitenwand (12) in der Richtung des Versorgungskanals (11) angeordnet ist, wodurch sie den Versorgungskanal in zwei parallele Kanäle aufteilt, die der Luftströmungsdurchgang (20) und eine Versorgungskammer (23) sind;
die Versorgungsschaltungskarte (18) so gedreht ist, daß die elektronischen Bauteile dieser Karte innerhalb der Versorgungskammer (23) liegen;
die Einlaß- und Auslaßöffnung (21, 24) am selben Ende des Versorgungskanals (11) angeordnet sind, wobei sie mit dem Luftströmungsdurchgang (20) bzw. der Versorgungskammer (23) kommunizieren; und daß
eine Luftströmungsrückführungsöffnung (22) zwischen dem Luftströmungsdurchgang (20) und der Versorgungskammer (23) an dem Ende des Versorgungskanals (11) vorgesehen ist, das auf der entgegengesetzten Seite der Einlaß- und Auslaßöffnungen liegt, wodurch die durch den Lufströmungsdurchgang (20) strömende Luft darauffolgend durch die Versorgungskammer (23) zur Auslaßöffnung (24) hingeleitet wird, während sie die elektronischen Bauteile auf der Versorgungsschaltungskarte (18) kühlt.

2. Vorrichtung nach Anspruch 1,
**dadurch gekennzeichnet**,
daß die Lufteinlaßöffnung (21) an einer Bodenwand (16) des Versorgungskanals (11) ausgebildet ist, und daß die Luftauslaßöffnung (24) auf einer hinteren Seitenwand (15) des Versorgungskanals (11) ausgebildet ist.

## Revendications

1. Appareil destiné à enregistrer et reproduire des informations, comprenant comme composants essentiels un boîtier (1), une section instruments (A) disposée dans le boîtier (1) afin d'enregistrer et de reproduire des informations, une section source d'alimentation électrique (B), comportant une carte de circuit de source d'alimentation (18) dans un conduit de source d'alimentation (11), ledit conduit étant disposé dans le boîtier (1), un orifice d'admission d'air (21) formé sur une première paroi (16) du conduit de source d'alimentation (11), un orifice de sortie d'air (24) formé sur une autre paroi (15) du conduit de source d'alimentation (11), un passage d'écoulement d'air (20) formé entre une première paroi latérale (12) du conduit de source d'alimentation (11) et la carte de circuit de source d'alimentation (18) de manière à permettre à l'orifice d'admission d'air (21) de communiquer avec l'orifice de sortie d'air (24), et un ventilateur de refroidissement (25) disposé dans l'orifice de sortie d'air (24), caractérisé en ce que
- ladite une paroi latérale (12) s'étend le long de la section instruments (A) adjacente, d'où il s'ensuit que ladite section instruments est refroidie par l'air s'écoulant au travers dudit passage d'écoulement d'air (20),
- ladite carte de circuit de source d'alimentation (18) est disposée parallèlement à ladite une paroi latérale (12) dans la direction dudit conduit de source d'alimentation (11), en divisant ainsi ledit conduit de source d'alimentation en deux conduits parallèles qui sont ledit passage d'écoulement d'air (20) et une enceinte de source d'alimentation (23),
- ladite carte de circuit de source d'alimentation (18) est orientée de façon que les composants électroniques de ladite carte se trouvent à l'intérieur de ladite enceinte de source d'alimentation (23),
- lesdits orifices d'admission et de sortie (21, 24) sont disposés à la même extrémité dudit conduit de source d'alimentation (11) communiquant avec ledit passage d'écoulement d'air (20) et ladite enceinte de source d'alimentation (23), respectivement, et en ce que
- un orifice de retour d'écoulement d'air (22) est disposé entre ledit passage d'écoulement d'air (20) et ladite enceinte de source d'alimentation (23) à l'extrémité du conduit de source d'alimentation (11) qui est opposé auxdits orifices d'admission et de sortie, d'où il s'ensuit que l'air s'écoulant au travers dudit passage d'écoulement d'air (20) est ensuite dirigé au travers de ladite enceinte de source d'alimentation (23) en direction dudit orifice de sortie (24) tandis qu'il refroidit lesdits composants électroniques présents sur ladite carte de circuit de source d'alimentation (18).

2. Appareil selon la revendication 1, caractérisé en ce que l'orifice d'admission d'air (21) est formé sur une paroi de fond (16) du conduit de source d'alimentation (11) et l'orifice de sortie d'air (24) est formé sur une paroi latérale arrière (15) du conduit de source d'alimentation (11).
